# EUROPEAN PATENT SPECIFICATION

(11) **EP 3 916 265 B1**
(45) Date of publication and mention of the grant of the patent: **17.04.2024**
(21) Application number: 20176668.0
(22) Date of filing: 26.05.2020
(51) Int. Cl.: F16D 67/02, F16D 7/02, F16D 43/21, F16D 43/20

(54) **MAGNET BRAKE-CLUTCH**
MAGNETBREMSKUPPLUNG
EMBRAYAGE-FREIN MAGNÉTIQUE

(43) Date of publication of application: 01.12.2021
(73) Proprietor: Edscha Engineering GmbH, 42855 Remscheid (DE)
(72) Inventor: GUTIERREZ FERNANDEZ, Jose- Manuel, 42855 Remscheid (DE)
(74) Representative: IPrime Bonnekamp Sparing Patentanwaltsgesellschaft mbH

(56) References cited:
- US-A- 3 329 243
- US-A- 5 529 157
- US-A1- 2018 371 821
- US-B2- 10 180 169

## Description

The invention relates to a drive assembly, particularly for driving a flap, according to the preamble of claim 1.

From practice drive assemblies are known which comprise an actuator element that is driven by a drive configured as an electric motor wherein the drive is coupled to the actuator element through a coupling arrangement. The coupling arrangement particularly decouples a driveshaft of the drive from the actuator element in case of an overload to protect the drive assembly against damage. Further such drive assemblies comprise a braking arrangement for braking a movement of the actuator element thus ensuring a quick stop of the movement of the actuator element in case of switching the drive off. The braking arrangement and the coupling arrangement are separated axially and thus need rather large installation space and increase the total axial length of the drive assembly. Further the braking arrangement as well as the coupling arrangement each have a separate preload element for preloading to define the brake force on the one hand and the threshold of the coupling force separately on the other hand. Disadvantageously the complexity and needed installation space is rather high which in turn leads to high costs of the drive assembly.

DE 10 2012 107 098 A1 shows a coupling arrangement which can be used in a drive assembly for providing an overload protection. The coupling arrangement comprises a first coupling element configured as a hub which can be coupled non-rotatably to a driveshaft of a drive. Further the coupling arrangement comprises a second coupling element configured as a ring rotatably supported on the first coupling element. A control disc is arranged between the first coupling element and the second coupling element wherein the control disc is coupled to the second coupling element by magnets arranged between the control disc and the second coupling element. The coupling between the first coupling element and the second coupling element is realised by balls arranged between the first coupling element and the second coupling element, wherein the balls are axially displaceable relative to the first coupling element and are preloaded to protrude into recesses arranged on the control disc. For preloading the balls, the coupling arrangement comprises a preloading element configured as a compression spring and a pressure plate arranged between the preloading element and the balls. The compression spring is arranged between the pressure plate and an adjusting nut for setting the preload force and thus the threshold value of torque above which the first coupling element is decoupled from the second coupling element and/or the control disc. Disadvantageously the coupling arrangement comprises many components and needs a rather high installation space in the axial direction as the different components are arranged axially next to each other. Further disadvantageously a braking arrangement is not included and has to be additionally mounted to the drive assembly in which the coupling arrangement is used. This limits the usability of the coupling arrangement and increases the costs to produce it.

US 5 529 157 A discloses a drive assembly comprising an actuator element designed as a pulley and a drive designed as a motor having a first drive shaft defining a drive axis for driving the actuator element. The drive assembly further comprises a coupling arrangement for coupling the first drive shaft with the actuator element, wherein the coupling arrangement comprises a first coupling element coupled with the first drive shaft by means of a pin arranged on the drive shaft coupling with a V-shaped recess arranged on the first coupling element. The coupling arrangement further comprises a second coupling element designed as a clutch plate coupled with the actuator element through frictional engagement. The drive assembly further comprises a preload element designed as a spring, wherein the preload element preloads the first coupling element towards the second coupling element. The drive assembly further comprises a braking arrangement for braking a movement of the actuator element, wherein the braking element comprises a first braking element designed as a brake pad fixedly connected to the drive by four nut and bolt assemblies.

US 3 329 243 A discloses a drive assembly, comprising an actuator element, a first drive shaft defining a drive axis for driving the actuator element. The drive assembly further comprises a coupling arrangement for coupling the first drive shaft with the actuator element, wherein the coupling arrangement comprises two face gears which are integral with the drive shaft and the actuator element. The drive assembly further comprises a preload element designed as a spring preloading the actuator element and the integrally formed face gear towards the first drive shaft and its integrally formed face gear. The actuator element also has a braking surface integrally formed with it which is designed as a cone coupleable to a conical break surface formed on a body of the drive assembly, wherein the conical break surface formed on the actuator element will engage with the conical break surface formed on the body for of the drive assembly when the actuator element is forced against the pre-loading of the preload element.

It is the object of the invention to provide a drive assembly that is safe to use, reliable and has a compact size.

The above object is achieved by a drive assembly according to claim 1.

According to an aspect of the invention a drive assembly, in particular for driving a flap, is created wherein the drive assembly comprises an actuator element, a drive having a first driveshaft defining a drive axis for driving the actuator element. The drive assembly further comprises a coupling arrangement for coupling the first driveshaft of the drive with the actuator element, wherein the coupling arrangement comprises a first coupling element coupled with the first driveshaft of the drive. Further the coupling arrangement comprises a second coupling element coupled with the actuator element and a preload element, wherein the preload element preloads the first coupling element towards the second coupling element. The drive assembly further comprises a braking arrangement for braking a movement of the actuator element, wherein the braking arrangement comprises a first braking element. The drive assembly is characterised in that the preload element preloads the first braking element to contact the coupling arrangement. Advantageously only one preload element is needed to define the coupling between the first coupling element and the second coupling element and thus the coupling between the driveshaft of the drive and the actuator element as well as the brake force which is produced by the contact of the first braking element to the coupling arrangement. The drive assembly thus is safe to use, reliable and has a compact size as less components are needed compared to known drive assemblies having a coupling arrangement as well as a braking arrangement.

In a preferred development the preload element preloads the first braking element towards one of the first coupling element and the second coupling element. Expediently the first braking element is in frictional contact with one of the first coupling element and the second coupling element in an engaged state of the braking arrangement. Preferably the preload element preloads the first braking element towards the first coupling element coupled with the actuator element. Advantageously the movement of the actuator element driven by the drive can be braked through the first braking element by breaking the coupling element that is coupled with said actuator element.

In a preferred embodiment the preload element is arranged between the first coupling element and the second coupling element. Preferably the preload element is configured as a magnet having a disc shape. Advantageously the coupling arrangement can be designed to be very compact and without the need of complex components as the magnet provides a reliable attraction force to preload the first coupling element towards the second coupling element through its magnetic field. Further advantageously the magnet provides a magnetic field which also provides the preloading of the first braking element as the magnetic field traverses the first coupling element and the second coupling element. Expediently at least one of the first coupling element and the second coupling element is at least in part made of a ferromagnetic metal. Preferably both the first coupling element and the second coupling element are made of a ferromagnetic metal.

Expediently the magnet is configured as a permanent magnet. Advantageously no external power source is needed to power the magnet as it would in contrast be the case if the magnet was configured as an electromagnet. As at least one of the first coupling element and the second coupling element is made at least in part of a ferromagnetic metal no additional components are needed to achieve a defined preload state for the coupling arrangement.

Preferably the first coupling element has a first recess. In an advantageous development the second coupling element has a second recess facing the first recess of the first coupling element. In a preferred embodiment the preload element is arranged in at least one the first recess and the second recess. Expediently at least one of the first recess and the second recess has a cylindrical shape. Preferably the first recess and the second recess enclose a cavity formed between the first coupling element and the second coupling element in a coupled state of the coupling arrangement. Most preferably the preload element is arranged in the cavity formed between the first coupling element and the second coupling element. Advantageously the preload element axially overlaps the first coupling element and the second coupling element thus providing a coupling arrangement that is designed compact and is still safe to use and reliable. Further advantageously the preload element is at least radially retained between the first coupling element and the second coupling element.

In a preferred development the coupling arrangement is configured as a cam coupling. Expediently the first coupling element is configured as a cams bell. In a preferred further development, the second coupling element is configured as a cams disc wherein the first coupling element has cams fitted to engage with corresponding cams arranged on the second coupling element. Expediently at least one of the first coupling element and the second coupling element is axially displaceable such that the first coupling element can be decoupled from the second coupling element.

Advantageously the axial force needed to decouple the first coupling element from the second coupling element is defined by the cams on each of the first coupling element and the second coupling element combined with the preloading force provided by the preload element. Thus, the coupling arrangement is operational independent of electrical power and thus functions fully even in case of a power failure of the drive assembly. Advantageously an overload protection is always provided even in case of a power failure which makes the drive assembly safe and very reliable to use.

Preferably the braking arrangement comprises a brake actuator drive with a actuator motor for actuating the first braking element. Expediently the brake actuator drive drives the first braking element axially such that the first braking element and the coupling arrangement are separateable and the braking arrangements thus disengageable. Advantageously the brake actuator drive provides control over the state of the braking arrangement in particular to switch the braking arrangement between an engaged and disengaged state.

In a preferred embodiment the first braking element is configured as a brake disc. Expediently the first braking element has a lever arm extending radially outwards. Advantageously the lever arm provides the possibility to control the position of the braking element for engaging or disengaging the braking arrangement. Preferably a cams gear having an external toothing is arranged at the lever arm. The cams gear advantageously is coupled rotatably to a motor pinion of the actuator drive. Preferably the external toothing of the cams gear meshes with an external toothing of the motor pinion of the actuator drive. Advantageously by actuating the motor pinion of the brake actuator drive the cams gear is drivingly rotated and in turn lifts the lever arm and together with it the first braking element in an axial direction for disengaging the first braking element and the coupling arrangement.

Further advantages, embodiments and features of the invention follow from the description below of a preferred embodiment and from the dependent claims.

The invention is explained in more detail with reference to the attached figure of a preferred embodiment of the invention.

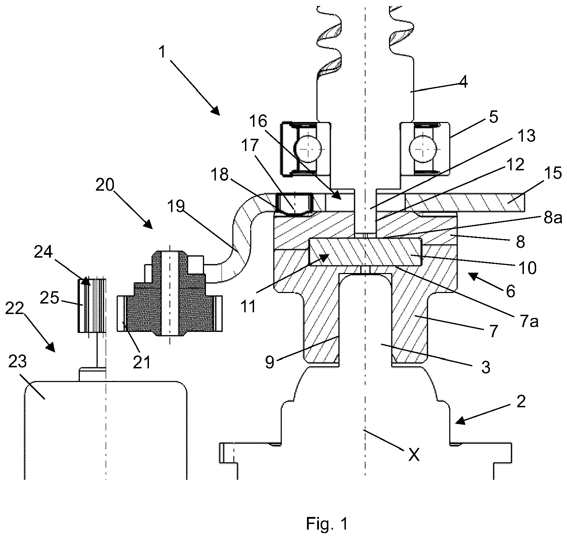

- Fig. 1: shows a preferred embodiment of a drive assembly according to the invention in a cross-sectional view.

Fig. 1 shows a preferred embodiment of a drive assembly 1 according to the invention in a cross-sectional sideview. The drive assembly 1 comprises a drive 2, wherein the drive 2 is configured as an electric motor having a first driveshaft 3, wherein the first driveshaft 3 is rotatable around a drive axis X.

The drive assembly 1 further comprises a first actuator element 4. The actuator element 4 is configured as a spindle rod which is rotatably supported by a bearing element 5 configured as a ball bearing. The spindle rod 4 may be coupled to a spindle nut not shown in Fig. 1 to form a spindle drive for drivingly actuate a vehicle flap between a closed and an open position.

The first driveshaft 3 is coupled to the first actuator element 4 by means of a coupling arrangement 6 axially arranged between the actuator element 4 and the first driveshaft 3. The coupling arrangement 6 comprises a first coupling element 7 that is coupled to the first driveshaft 3. The first coupling element 7 is configured as a cams bell made of a ferromagnetic metal. The coupling arrangement 6 further comprises a second coupling element 8. The second coupling element 8 is configured as a cams disc placed on top of the cams bell 7 such that they are coupled to each other. The second coupling element 8 is also made of a ferromagnetic metal.

The first driveshaft 3 is non-rotatably fixed to the first coupling element 7, which is configured as a cams bell. To this purpose the cams bell 7 has a central blind hole 9, in which the first driveshaft 3 is inserted and non-rotatably fixed within the blind hole 9. Further the drive assembly 1 comprises a magnet 10 which is placed between the cams bell 7 and the cams disc 8.

To define the position of the magnet 10 between the cams bell 7 and the cams disc 8 the cams bell 7 has a first cylindrical recess 7a on the top. The cams disc 8 has a second cylindrical recess 8a on the bottom facing the first cylindrical recess 7a of the cams bell 7 such that the magnet 10 is arranged in between the first cylindrical recess 7a and the second cylindrical recess 8a. In the coupled state of the coupling arrangement 6 shown in Fig. 1, a closed cavity 11 is thus formed between the first cylindrical recess 7a and the second cylindrical recess 8a in which the magnet 10 is arranged.

Advantageously the magnet 10 is configured as a permanent magnet having a circular disc form having proportions to fit in the first cylindrical recess 7a and the second cylindrical recess 8a such that the magnet 7 is held radially in place and is filling nearly the whole cavity 11. Advantageously the magnet 10 is arranged concentrically aligned relative to the drive axis X of the drive 2. As both the cams bell 7 as well as the cams disc 8 are made of a ferromagnetic metal, the magnet 7 holds the cams bell 7 and the cams disc 8 together by means of magnetic forces produced by the magnet 10. The magnet 10 therefore has the function of a preload element that preloads the cams bell 7 towards the cams disc 8 and vice versa and therefore defines a threshold amount of torque needed to decouple the cams bell 7 and the cams disc 8 from each other and thus interrupt the transmission of torque between driveshaft 3 and spindle rod 4.

The cams disc 8 has a central bore 12 in which a coupling pin 13 of the actuator element 4 configured as a spindle rod is inserted. The coupling pin 13 is non-rotatably fixed to the central bore 12 of the cams disc 8 wherein the cams disc 8 is displaceable in an axial direction parallel to the drive axis X. Advantageously the cams bell 7 and the cams disc 8 can be decoupled by displacing the cams disc 8 away from cams bell 7, i.e. upwards as illustrated in Fig. 1. This equates a state in which the coupling between the first driveshaft 3 of the drive 2 and the actuator element 4 is released. Advantageously the coupling arrangement 6 is thus configured as an overload protection device which limits the amount of torque transferred from the first driveshaft 3 to the actuator element 4 and vice versa.

Further the drive assembly 1 comprises a braking arrangement 14 for braking a rotational movement of the actuator element 4. The braking arrangement 14 comprises a brake disc 15. The brake disc 15 is arranged on top of the cams disc 8 and has a central bore 16. In the engaged state of the braking arrangement 14 shown in Fig. 1, the brake disc 15 is in frictional contact with the cams disc 8. The coupling pin 13 at the end of the actuator element 4 passes through said central bore 16 of the brake disc 15 such that the actuator element 4 together with the cams disc 8 can rotate relative to the brake disc 15 wherein a braking force counteracting the rotation is produced by the frictional contact of the brake disc 15 with the cams disc 8. The brake disc 15 is axially displaceable such that it can be disengaged from the cams disc 8. The brake disc 15 is made of ferromagnetic metal so that the brake disc 15 is preloaded axially against the cams disc 8 through the magnetic field produced by the magnet 10. Advantageously the magnet 10 provides the preloading of the cams disc 8 against the cams bell 7 for the coupling arrangement 6 as well as the preloading of the brake disc 15 against the cams disc 8 for the braking arrangement 14.

The brake disc 15 has a protrusion 17 on its bottom axial side facing the top side of cams disc 8. The cams disc 8 has on its upper side a corresponding ring shaped groove 18. The protrusion 17 of the brake disc 15 engages with the groove 18 of the cams disc 8 and thus a braking force is generated by the brake disc 15 on the cams disc 8 wherein the brake disc 15 is radially guided by the groove 18 of the cams disc 8. As the cams disc 8 is non-rotatably fixed to the coupling pin 13 of the actuator element 4, the brake disc 15 at the same time generates a braking force counteracting the rotation of the actuator element 4. Advantageously the braking arrangement 14 will provide a more precise actuation of a flap as the rotation of the actuator element 4 will stop faster after turning off the drive 2 for driving the rotation of the actuator element 4.

The brake disc 15 further has a lever arm 19 extending radially outwards. At the end of the lever arm 19 a cams gear 20 with an external toothing 21 rotatable about a rotation axis Y parallel to the drive axis X is arranged wherein the cams gear 20 is coupled to a brake actuator drive 22. The brake actuator drive 22 comprises an actuator motor 23 configured as an electric motor. The actuator motor 23 has a motor pinion 24 having an external toothing 25 rotatable about a rotation axis Z parallel to the rotation axis Y of cams gear 20. The external toothing 25 of motor pinion 24 meshes with the external toothing 21 of the cams gear 20 such that the cams gear 20 is rotatable through actuation of the brake actuator drive 22.

The operation of the driving assembly 1 and especially the coupling arrangement 6 and the braking arrangement 14 incorporated therein is explained below with reference to the embodiment shown in Fig. 1:
The cams bell 7 has cams on its top side and the cams disc 8 has corresponding cams on its bottom side which are engaged with each other. The cams bell 7 and the cams disc 8 are preloaded against each other by the magnetic force produced by the magnet 10 arranged between the cams bell 7 and the cams disc 8 as both the cams bell 7 and the cams disc 8 are made of ferromagnetic metal. The magnetic force provides an upper value of an axial force between the cams bell 7 and the cams disc 8.

In case the torque between the cams bell 7 being fixed to the first driveshaft 3 of the drive 2 and the cams disc 8 being non-rotatably fixed to the actuator element 4 exceeds a given threshold value, the cams disc 8 is lifted from the cams bell 7 by the axial forces produced by the slipping of the cams of the cams bell 7 relative to the cams of the cams disc 8. Thus, the torque transmission between the first driveshaft 3 of the drive 2 and the spindle rod 4 is advantageously interrupted and thus protects the drive assembly 1 from overloading which might otherwise damage the internal components. Such overloading might occur for instance when excessive force is applied manually to the flap being coupled to the drive assembly.

The brake disc 15 of the braking arrangement 14 is non-rotatably fixed relative the cams disc 8 as the lever arm 19 of the brake disc 15 is coupled to the brake actuator drive 22 and thus provides a braking force counteracting the rotation of the cams disc 8 and the actuator element 4 coupled to the cams disc 8 non-rotatably. The cams gear 20 is rotatable about a rotation axis Y parallel to the drive axis X. The cams gear 20 has on its upper side cams 20a which engage with a corresponding control curve 19a provided at bottom side of the end of lever arm 19. When the cams gear 20 rotatably mounted at the end of lever arm 19 is drivingly rotated by the rotation of the motor pinion 24 of the actuator motor 23 the lever arm 19 together with the brake disc 15 is lifted upwards such that the brake disc 15 is separated from the cams disc 8 and thus disengages the braking arrangement 14 from the actuator element 4.

Advantageously the braking arrangement 14 can be switched between an engaged and disengaged state through actuation of brake actuator drive 22. The preloading of the brake disc 15 towards the cams disc 8 in the engaged state is provided by the magnetic force of the magnet 10 as the magnetic field of magnet 10 traverses the cams disc 8 and attracts the braking disc 15 made of a ferromagnetic metal towards the cams disc 8. Further the disengaged state is also upheld in the case of a power failure as the brake disc is mechanically locked via the cams gear position at the lever arm 19.

Above the invention was described according to an embodiment of a drive assembly in which the actuator element is configured as a spindle rod. It has to be understood that the actuator element may also be configured as a spindle nut or any other component which acts as an actuator element in the drive assembly.

Above the invention was described according to an embodiment of a drive assembly in which the preloading element is configured as a magnet. It has to be understood that the preload element may also be configured as a mechanical preload element like a spring, wherein in this case opposite ends spring are engaged with the first braking element and with an opposite end of the coupling arrangement such that the spring preloads the braking element, the first coupling element and the second coupling element as a staking structure.

## Claims

1. Drive assembly, in particular for driving a flap, comprising
an actuator element (4),
a drive (2) having a first drive shaft (3) defining a drive axis (X) for driving the actuator element (4),
a coupling arrangement (6) for coupling the first drive shaft (3) of the drive (2) with the actuator element (4), wherein the coupling arrangement (6) comprises a first coupling element (7) coupled with the first drive shaft (3) of the drive (2),
a second coupling element (8) coupled with the actuator element (4),
a preload element (10), wherein the preload element (10) preloads the first coupling element (7) towards the second coupling element (8), and
a braking arrangement (14) for braking a movement of the actuator element (4),
wherein the braking arrangement (14) comprises a first braking element (15),
**characterised in**
**that** the preload element (10) preloads the first braking element (15) to contact the coupling arrangement (6).

2. Drive assembly according to claim 1, wherein the preload element (10) preloads the first braking element (15) towards one of the first coupling element (7) and the second coupling element (8).

3. Drive assembly according to claim 1 or 2, wherein the first braking element (15) is in frictional contact with one of the first coupling element (7) and the second coupling element (8).

4. Drive assembly according to one of the preceding claims, wherein the preload element (10) is arranged between the first coupling element (7) and the second coupling element (8).

5. Drive assembly according to one of the preceding claims, wherein the preload element (10) is configured as a magnet having a disk shape.

6. Drive assembly according to claim 5, wherein the magnet is configured as a permanent magnet.

7. Drive assembly according to one of the preceding claims, wherein the first coupling element (7) has a first recess (7a).

8. Drive assembly according to claim 7, wherein the second coupling element (8) has a second recess (8a) facing the first cylindrical recess (7a) of the first coupling element.

9. Drive assembly according to claim 8, wherein the first cylindrical recess (7a) and the second cylindrical recess (8a) enclose a cavity (11) in a coupled state of the coupling arrangement (6).

10. Drive assembly according to claim 8 or 9, wherein the preload element (10) is arranged in at least one of the first cylindrical recess (7a) and the second cylindrical recess (8a).

11. Drive assembly according to claim 9, wherein the preload element (10) is arranged in the cavity (11) formed between the first coupling element (7) and the second coupling element (8).

12. Drive assembly according to one of the preceding claims, wherein the coupling arrangement (6) is configured as a cam coupling.

13. Drive assembly according to claim 12, wherein the first coupling element (7) is configured as a cams bell.

14. Drive assembly according to claim 12, wherein the second coupling element (8) is configured as a cams disk.

15. Drive assembly according to one of the preceding claims, wherein at least one of the first coupling element (7) and the second coupling element (8) is axially displaceable such that the first coupling element (7) can be decoupled from the second coupling element (8).

16. Drive assembly according to one the preceding claims, wherein the braking arrangement (14) comprises a braking actuator drive (22) with a actuator motor (23) for actuating the first braking element (15).

17. Drive assembly according to claim 16, wherein the braking actuator drive (22) drives the first braking element (15) to move axially such that the first braking element (15) and the coupling arrangement (6) are separated and the braking arrangement (14) is thus disengageable.

18. Drive assembly according to one of the preceding claims, wherein the first braking element (15) is configured as a brake disk.

19. Drive assembly according to one of claims 16 or 17, wherein the first braking element (15) has a lever arm (19) extending radially outwards.

20. Drive assembly according to claim 19, wherein a cams gear (20) having an external toothing (21) is arranged at the lever arm (19).

21. Drive assembly according to claim 20, wherein the cams gear (20) is coupled to a motor pinion (24) of the actuator drive (22).

22. Drive assembly according to claim 21, wherein the external toothing (21) of the cams gear (20) meshes with an external toothing of the motor pinion (24) of the actuator drive (22).

## Patentansprüche

1. Antriebsanordnung, insbesondere zum Antrieb einer Klappe, umfassend
ein Betätigungselement (4),
einen Antrieb (2) mit einer ersten Antriebswelle (3), die eine Antriebsachse (X) zum Antreiben des Betätigungselementes (4) definiert,
eine Kopplungsanordnung (6) zur Kopplung der ersten Antriebswelle (3) des Antriebs (2) mit dem Betätigungselement (4), wobei die Kopplungsanordnung (6) ein mit der ersten Antriebswelle (3) gekoppeltes erstes Kopplungselement (7) umfasst,
ein zweites Kopplungselement (8), das mit dem Betätigungselement (4) gekoppelt ist,
ein Vorspannelement (10), wobei das Vorspannelement (10) das erste Kopplungselement (7) auf das zweite Kopplungselement (8) vorspannt, und
eine Bremsanordnung (14) zum Abbremsen einer Bewegung des Betätigungselements (4),
wobei die Bremsanordnung (14) ein erstes Bremselement (15) umfasst, **dadurch gekennzeichnet,**
**dass** das Vorspannelement (10) das erste Bremselement (15) vorspannt, um die Kopplungsanordnung (6) zu berühren.

2. Antriebsanordnung nach Anspruch 1, wobei das Vorspannelement (10) das erste Bremselement (15) in Richtung eines von erstem Kopplungselement (7) und zweitem Kopplungselement (8) vorspannt.

3. Antriebsanordnung nach Anspruch 1 oder 2, wobei das erste Bremselement (15) in Reibungskontakt mit einem von erstem Kopplungselement (7) und zweitem Kopplungselement (8) steht.

4. Antriebsanordnung nach einem der vorhergehenden Ansprüche, wobei das Vorspannelement (10) zwischen dem ersten Kopplungselement (7) und dem zweiten Kopplungselement (8) angeordnet ist.

5. Antriebsanordnung nach einem der vorhergehenden Ansprüche, wobei das Vorspannelement (10) als Magnet mit einer Scheibenform ausgebildet ist.

6. Antriebsanordnung nach Anspruch 5, wobei der Magnet als Permanentmagnet ausgebildet ist.

7. Antriebsanordnung nach einem der vorhergehenden Ansprüche, wobei das erste Kopplungselement (7) eine erste Ausnehmung (7a) aufweist.

8. Antriebsanordnung nach Anspruch 7, wobei das zweite Koppelelement (8) eine zweite Ausnehmung (8a) aufweist, die der ersten zylindrischen Ausnehmung (7a) des ersten Koppelelements gegenüberliegt.

9. Antriebsanordnung nach Anspruch 8, wobei die erste zylindrische Ausnehmung (7a) und die zweite zylindrische Ausnehmung (8a) in einem gekoppelten Zustand der Kopplungsanordnung (6) einen Hohlraum (11) umschließen.

10. Antriebsanordnung nach Anspruch 8 oder 9, wobei das Vorspannelement (10) in mindestens einer der ersten zylindrischen Ausnehmung (7a) und der zweiten zylindrischen Ausnehmung (8a) angeordnet ist.

11. Antriebsanordnung nach Anspruch 9, wobei das Vorspannelement (10) in dem zwischen dem ersten Kopplungselement (7) und dem zweiten Kopplungselement (8) gebildeten Hohlraum (11) angeordnet ist.

12. Antriebsanordnung nach einem der vorhergehenden Ansprüche, wobei die Kopplungsanordnung (6) als Nockenkopplung ausgebildet ist.

13. Antriebsanordnung nach Anspruch 12, wobei das erste Kopplungselement (7) als Nockenglocke ausgebildet ist.

14. Antriebsanordnung nach Anspruch 12, wobei das zweite Kupplungselement (8) als Nockenscheibe ausgebildet ist.

15. Antriebsanordnung nach einem der vorhergehenden Ansprüche, wobei mindestens eines von dem ersten Kopplungselement (7) und dem zweiten Kopplungselement (8) axial verschiebbar ist, so dass das erste Kopplungselement (7) von dem zweiten Kopplungselement (8) entkoppelt werden kann.

16. Antriebsanordnung nach einem der vorhergehenden Ansprüche, wobei die Bremsanordnung (14) einen Bremsaktuatorantrieb (22) mit einem Aktuatormotor (23) zur Betätigung des ersten Bremselements (15) umfasst.

17. Antriebsanordnung nach Anspruch 16, wobei der Bremsaktuatorantrieb (22) das erste Bremselement (15) zu einer axialen Bewegung antreibt, so dass das erste Bremselement (15) und die Kupplungsanordnung (6) getrennt werden können und die Bremsanordnung (14) somit auskuppelbar ist.

18. Antriebsanordnung nach einem der vorhergehenden Ansprüche, wobei das erste Bremselement (15) als Bremsscheibe ausgebildet ist.

19. Antriebsanordnung nach einem der Ansprüche 16 oder 17, wobei das erste Bremselement (15) einen sich radial nach außen erstreckenden Hebelarm (19) aufweist.

20. Antriebsanordnung nach Anspruch 19, wobei am Hebelarm (19) ein Nockengetriebe (20) mit einer Außenverzahnung (21) angeordnet ist.

21. Antriebsanordnung nach Anspruch 20, wobei das Nockengetriebe (20) mit einem Motorritzel (24) des Aktuatorantriebs (22) gekoppelt ist.

22. Antriebsanordnung nach Anspruch 21, wobei die Außenverzahnung (21) des Nockengetriebes (20) mit einer Außenverzahnung des Motorritzels (24) des Aktuatorantriebs (22) in Eingriff steht.

## Revendications

1. Ensemble d'entraînement, en particulier pour l'entraînement d'un volet, comprenant
un élément actionneur (4),
un entraînement (2) ayant un premier arbre d'entraînement (3) définissant un axe d'entraînement (X) destiné à entraîner l'élément actionneur (4),
un agencement d'accouplement (6) destiné à accoupler le premier arbre d'entraînement (3) de l'entraînement (2) à l'élément actionneur (4), dans lequel l'agencement d'accouplement (6) comprend un premier élément d'accouplement (7) accouplé au premier arbre d'entraînement (3) de l'entraînement (2),
un second élément d'accouplement (8) accouplé à l'élément actionneur (4),
un élément de précharge (10), dans lequel l'élément de précharge (10) précharge le premier élément d'accouplement (7) vers le second élément d'accouplement (8), et
un agencement de freinage (14) destiné à freiner un mouvement de l'élément actionneur (4),
dans lequel l'agencement de freinage (14) comprend un premier élément de freinage (15),
**caractérisé en ce**
**que** l'élément de précharge (10) précharge le premier élément de freinage (15) afin d'entrer en contact avec l'agencement d'accouplement (6).

2. Ensemble d'entraînement selon la revendication 1, dans lequel l'élément de précharge (10) précharge le premier élément de freinage (15) vers l'un parmi le premier élément d'accouplement (7) et le second élément d'accouplement (8).

3. Ensemble d'entraînement selon la revendication 1 ou 2, dans lequel le premier élément de freinage (15) est en contact par friction avec l'un parmi le premier élément d'accouplement (7) et le second élément d'accouplement (8).

4. Ensemble d'entraînement selon l'une des revendications précédentes, dans lequel l'élément de précharge (10) est agencé entre le premier élément d'accouplement (7) et le second élément d'accouplement (8).

5. Ensemble d'entraînement selon l'une des revendications précédentes, dans lequel l'élément de précharge (10) est conçu comme un aimant ayant une forme de disque.

6. Ensemble d'entraînement selon la revendication 5, dans lequel l'aimant est conçu comme un aimant permanent.

7. Ensemble d'entraînement selon l'une des revendications précédentes, dans lequel le premier élément d'accouplement (7) a un premier évidement (7a).

8. Ensemble d'entraînement selon la revendication 7, dans lequel le second élément d'accouplement (8) a un second évidement (8a) faisant face au premier évidement (7a) cylindrique du premier élément d'accouplement.

9. Ensemble d'entraînement selon la revendication 8, dans lequel le premier évidement (7a) cylindrique et le second évidement (8a) cylindrique renferment une cavité (11) dans un état accouplé de l'agencement d'accouplement (6).

10. Ensemble d'entraînement selon la revendication 8 ou 9, dans lequel l'élément de précharge (10) est agencé dans au moins l'un parmi le premier évidement (7a) cylindrique et le second évidement (8a) cylindrique.

11. Ensemble d'entraînement selon la revendication 9, dans lequel l'élément de précharge (10) est agencé dans la cavité (11) formée entre le premier élément d'accouplement (7) et le second élément d'accouplement (8).

12. Ensemble d'entraînement selon l'une des revendications précédentes, dans lequel l'agencement d'accouplement (6) est conçu comme un accouplement à came.

13. Ensemble d'entraînement selon la revendication 12, dans lequel le premier élément d'accouplement (7) est conçu comme une cloche à cames.

14. Ensemble d'entraînement selon la revendication 12, dans lequel le second élément d'accouplement (8) est conçu comme un disque à cames.

15. Ensemble d'entraînement selon l'une des revendications précédentes, dans lequel au moins l'un parmi le premier élément d'accouplement (7) et le second élément d'accouplement (8) peut se déplacer axialement de sorte que le premier élément d'accouplement (7) puisse être désaccouplé du second élément d'accouplement (8).

16. Ensemble d'entraînement selon l'une des revendications précédentes, dans lequel l'agencement de freinage (14) comprend un entraînement d'actionneur (22) de freinage avec un servomoteur (23) destiné à actionner le premier élément de freinage (15).

17. Ensemble d'entraînement selon la revendication 16, dans lequel l'entraînement d'actionneur (22) de freinage entraîne le premier élément de freinage (15) à se déplacer axialement de sorte que le premier élément de freinage (15) et l'agencement d'accouplement (6) sont séparés et que l'agencement de freinage (14) est ainsi désolidarisable.

18. Ensemble d'entraînement selon l'une des revendications précédentes, dans lequel le premier élément de freinage (15) est conçu comme un disque de frein.

19. Ensemble d'entraînement selon l'une des revendications 16 ou 17, dans lequel le premier élément de freinage (15) a un bras de levier (19) s'étendant radialement vers l'extérieur.

20. Ensemble d'entraînement selon la revendication 19, dans lequel un engrenage à cames (20) ayant une denture extérieure (21) est agencé au niveau du bras de levier (19).

21. Ensemble d'entraînement selon la revendication 20, dans lequel l'engrenage à cames (20) est accouplé à un pignon moteur (24) de l'entraînement d'actionneur (22).

22. Ensemble d'entraînement selon la revendication 21, dans lequel la denture extérieure (21) de l'engrenage à cames (20) s'engrène avec une denture extérieure du pignon moteur (24) de l'entraînement d'actionneur (22).
